(19) Europäisches Patentamt
European Patent Office
Office européen des brevets

(11) Veröffentlichungsnummer : **0 398 279 B1**

(12) # EUROPÄISCHE PATENTSCHRIFT

(45) Veröffentlichungstag der Patentschrift :
**15.09.93 Patentblatt 93/37**

(51) Int. Cl.$^5$ : **A23G 3/00**

(21) Anmeldenummer : **90109219.7**

(22) Anmeldetag : **16.05.90**

(30) Priorität : **18.05.89 DE 3916189**
**02.12.89 DE 3939997**

(43) Veröffentlichungstag der Anmeldung :
**22.11.90 Patentblatt 90/47**

(45) Bekanntmachung des Hinweises auf die
Patenterteilung :
**15.09.93 Patentblatt 93/37**

(84) Benannte Vertragsstaaten :
**AT BE CH DE DK ES FR GB GR IT LI LU NL SE**

(56) Entgegenhaltungen :
**DD-A- 216 477**
**DE-A- 2 401 259**
**DE-B- 2 353 582**
**CONFECTIONARY PRODUCTION**
**Confectionary Production,Band 54, Nr.7, Juli**
**1988,Seiten 418-420,424,Surbiton, Surrey, GB**

(73) Patentinhaber : **XYROFIN OY**
**Kyllikinportti 2**
**SF-00240 Helsinki (FI)**

(72) Erfinder : **Cappelmann, Karl**
**Augustiner Strasse 26**
**D-5065 Solingen-Wald (DE)**
Erfinder : **Krüger, Christoph**
**Wulfdorfer Weg 104b**
**D-2000 Hamburg 67 (DE)**

(74) Vertreter : **Fitzner, Ulrich, Dr.**
**Konrad-Adenauer-Platz 17**
**D-40852 Ratingen-Lintorf (DE)**

(54) **Zuckerfreie Krustenpraline.**

**Beschreibung**

Die vorliegende Erfindung betrifft ein Gemisch zur Herstellung von zuckerfreien Krusten-Pralinen.

Krusten-Pralinen setzen sich nach dem bisher bekannten Stand der Technik aus Saccharose, Wasser oder Wasser-Alkohol-Gemischen mit oder ohne Zusatz von Geschmacksstoffen und Genußmittelsäure zusammen. In einer typischen Rezeptur werden 2500 g Wasser, 7500 g Saccharose und 2000 g 60 Vol. %-iger Alkohol gemischt. Dieses Gemisch wird bei einer Kochtemperatur von 111 bis 114 °C gekocht, wobei sich ein Trockensubstanzgehalt von 82 bis 86 % ergibt.

Nach dem Kochen (Konzentrieren) von Zucker und Wasser wird bei alkoholischer Krustenware der Alkohol sofort in die heiße Zuckerlösung untergemischt. Spezielle Mischsysteme verhindern Alkoholverluste. Durch die Zugabe von 60 Vol. %-igem Alkohol sinkt der Trockensubstanzgehalt auf 86 bis 72 % je nach Kochgrad und Zugabemenge. Auch wird die maximale Löslichkeit der Saccharose von 67 % bei 20 °C in reiner wässriger Lösung auf ca. 57 % gesenkt, wenn sie in einer wässrig-alkoholischen Lösung mit 10 Gew.-% Alkohol gelöst wird. Es bleibt also genügend Saccharose für die Krustenbildung übrig.

Die sogenannte saure Krustenware setzt sich typischerweise aus 7500 g Saccharose, 2500 g Wasser, 10 g Fruchtaroma und 100 g Genußmittelsäure (Citronensäure monohydrat 1:1 gelöst) zusammen. Im Gegensatz zur alkoholischen Krustenpraline wird der Kochgrad auf 108 bis 109 °C eingestellt, woraus sich 78 bis 79 % Trockensubstanzgehalt ergeben. Das Aroma und die Genußmittelsäure werden der Zuckerlösung erst nach dem Abkühlen der Lösung auf 65 °C zugegeben. Diese niedrige Temperatur ist erforderlich, um eine zu hohe Inversion der Saccharose und somit zu schwache Krustenbildung zu vermeiden.

Die so präparierten Lösungen werden mittels sogenannter Mogulanlagen in Formpuder gegossen. Die Temperatur der Stärke liegt bei alkoholischer Krustenware bei 35 bis 55 °C. Bei saurer Krustenware liegt die Temperatur unter 30 °C. Die Restfeuchte des Formpuders liegt für beide Gießlösungen bei 5 - 7 %. Die Reifezeit liegt bei 24 Std., gewendet wird nach 2 Std.. Nach dem Reifen werden die Produkte ausgepudert und mit Schokolade überzogen.

In den letzten Jahren ist man immer mehr bestrebt, wegen der Risiken für die Zahngesundheit und um Diabetikern eine für sie geeignete, sichere Alternative zu bieten, Saccharose durch zahnschonende und für Diabetiker geeignete Zuckeraustauschstoffe zu ersetzen. Bei Krustenware stellte sich jedoch das Problem, daß es bisher nicht gelungen war, mit Zuckeraustauschstoffen eine mechanisch ausreichend stabile Kruste zu erzeugen, welche beim Auspudern und beim Überziehen nicht zerstört wird. so behandelt "Sugarless Confectionary - using sorbitol, mannitol and lycasin [R] " by M. Serpelloni, Confectionary Production, No. 7, 1988 die Möglichkeiten des Austausches von Zuckern gegen Zuckeralkohole. Daß dies möglich ist, war auch schon aus anderen Veröffentlichungen bekannt, sofern mit Hilfe der Polyole keine Kruste gebildet werden mußte; denn Polyole haben einen ähnlichen Süßungsgrad wie Zucker. Aufgrund der Angaben kann der Fachmann jedoch noch keine Krustenware herstellen, die eine mechanisch ausreichend stabile Kruste aufweist.

In der DD-A-226477 wird beschrieben, daß Füllungen für Pralinen auch Zuckerauschstoffe enthalten können. Dies wird insbesondere im Hinblick auf Diabetiker erwähnt. Bei der Herstellung von Pralinenfüllungen stellen sich jedoch nicht die oben wiedergegebenen Probleme, welche bei der Produktion von Krustenwaren zu bewältigen sind; denn bei Pralinenfüllungen ist man gerade bestrebt, die Bildung einer Zuckerkruste zu verhindern. Demgemäß werden in der Praxis häufig Stoffe der Pralinenfüllung zugesetzt, welche die Kristallisation der Saccharose verhindern, z.B. Enzyme. Bei Einsatz von Polyolen für Pralinenfüllungen war man daher nicht mit dem Problem konfrontiert, durch Auskristallisation eine stabile Kruste erzeugen zu müssen. Man hatte es vielmehr als Vorteil empfunden, daß Polyole beim spontanen Auskristallisieren keine stabile Kruste bilden.

Gegenstand der vorliegenden Erfindung ist demgemäß eine zuckerfreie Krustenpraline, bestehend aus Polyolen, Wasser oder einem Wasser-Alkohol-Gemisch, Gelier- und kristallisationsverzögernden Verdickungsmitteln sowie Aromen und/oder Genußmittelsäuren, erhältlich durch Mischen von 42-71 Gew.-% Polyol, 28-48 Gew.-% Wasser oder Wasser-Alkohol-Gemisch, 10-1 Gew-.% Gelier- und Verdickungsmitteln, anschließendes Kochen dieses Gemisches und Gießen in Formpuder, welche die genannten Nachteile des Einsatzes von Zuckeraustauschstoffen nicht mehr aufweist.

Grundsätzlich gilt, daß beim Herstellen von Krustenpralinen mit Polyolen andere Mischungsverhältnisse einzuhalten sind als bei saccharosehaltigen Gemischen.

Beim Herstellen von Krustenpralinen mit Saccharose hat man üblicherweise eine Zucker-Wasser-Verhältnis von 3:1. Dieses Verhältnis reicht aus, um beim Kochen die Saccharose vollständig zu lösen. Beim Austausch der Saccharose gegen Polyole muß man ein Verhältnis von zwei Teilen Polyol zu einem Teil Wasser wählen. Dies ist wegen der im Vergleich zu Saccharose unterschiedlichen Löslichkeiten und Siedepunkte erforderlich. Zu der nachfolgenden Tabelle sind die den bestimmten Siedepunkten entsprechenden Trockensubstanzgehalte von Lösungen von Saccharose, Sorbit, Lactit und das erfindungsgemäß typischerweise als Polyol verwendete Xylit gegenübergestellt. Es sei jedoch an dieser Stelle betont, daß neben den den genannten

2

Polyolen auch andere für die Zwecke der Erfindung in Betracht kommen, z.B. Mannit, Maltit und Isomalt. Zusätzlich kann das Gemisch Genußmittelsäuren und/oder Aromen enthalten.

## Tabelle

| Temperatur | Saccharose | Sorbit | Lactit | Xylit |
|---|---|---|---|---|
| Kochgrad C | TS% | TS% | TS% | TS% |
| 106 | 74,1 | 63,3 | -- | 60,2 |
| 107 | -- | -- | 73,9 | -- |
| 108 | -- | 70,0 | -- | 65,5 |
| 109 | 78,8 | -- | -- | -- |
| 110 | | 74,4 | 80,0 | 70,5 |
| 111 | -- | -- | -- | -- |
| 112 | -- | 78,0 | 82,0 | 74,6 |
| 113 | 85,2 | -- | -- | -- |
| 114 | -- | 80,5 | 85,1 | 77,9 |
| 115 | -- | -- | -- | -- |
| 116 | -- | 82,4 | 86,2 | 80,5 |

Aus der vorliegenden Tabelle ist erkennbar, daß der Trockensubstanzgehalt von Lösungen von Polyolen bei bestimmten Siedetemperaturen anders ist als bei Saccharose. Es ist ferner ersichtlich, daß höhere Kochgrade notwendig sind, um mit Polyolen die gleichen Trockensubstanzgehalte wie mit Saccharose zu erzielen. Um z.B. mit Xylit einen Trockensubstanzgehalt von 70,5 % zu erzielen, ist ein Kochgrad von 110 °C notwendig. Eine Saccharoselösung hat bei diesem Kochgrad einen Trockensubstanzgehalt von 78,6 %. Polyole haben auch andere Sättigungskonzentrationen in wässriger Lösung, wie die folgende Tabelle wiedergibt:

### Löslichkeit von Saccharose und Polyolen bei 20 °C in Gew.-%

| | |
|---|---|
| Saccharose | 67 |
| Sorbit | 70 |
| Xylit | 63 |
| Maltit | 62 |
| Lactit | 55 |
| Isomalt | 25 |

Wie die folgende Abbildung zeigt, ist die maximale Löslichkeit von Xylit jedoch nur unterhalb von 30 °C geringer als bei Saccharose. Oberhalb dieser Temperatur ist Xylit besser löslich als Saccharose.

Abbildung 2

Löslichkeit von Xylit und Saccharose in Wasser

Wegen der z.T. erheblich größeren Lösungswärme der Polyole im Vergleich zu Saccharose wird zu ihrer Lösung mehr Energie benötigt. Diese beim Kristallisieren als Wärme freiwerdende Energie muß nach dem Eingießen in Formpuder wieder abgeführt werden. Die folgende Tabelle gibt die Lösungswärmen von Saccharose und Polyolen in kJ/kg wieder:

Saccharose - 18,16
Isomalt - 39,40
Lactit - 53,20
Sorbit - 110,99
Mannit - 120,88
Xylit - 153,07

Je nach Temperatur des Formpuders dauert das Auskristallisieren von z.B. Xylit für die Krustenbildung bis zu 6 Std.. In dieser Zeit passiert gar nichts, d.h. die Gießmasse hat nicht die Neigung, Kristalle zu bilden. Während dieser 6 Std., in welchen keine Neigung der Lösung besteht, zu kristallisieren, verkleistert die Gießmasse an den Kontaktstellen mit der Stärke.

Um das zu verhindern, müssen Geliermittel oder viskositätserhöhende Stoffe (Verdickungsmittel) zugesetzt werden. Hierfür eignen sich z.B. Pektine, Gummi-Arabikum und Agar-Agar. Ein weiterer Grund des Einsatzes von Pektin und Gummi-Arabikum in die Gießmasse ist, daß nach Ablauf der oben erwähnten 6 Stunden Xylit spontan auskristallisiert und die Lösung zu große Kristalle ausscheidet, was zu einer instabilen Kruste oder aber zu einem vermusten Krustenkörper führt. Der relativ hohe Anteil an Gummi-Arabikum wirkt verzögernd auf den Kristallisationsvorgang. Es werden nur kleine Kristalle gebildet, die eine stabile Kruste bilden. Die genannten Stoffe sind demzufolge für ein kontrolliertes Auskristallisieren erforderlich. Der hohe Anteil an Gummi-Arabikum zeigt auch, daß die Kristallisationsverzögerung sehr stark sein muß.

Andere Geliermittel als Gummi-Arabikum als Verdickungsmittel zeigen andere Wirkungen. Beim Einsatz von Agar-Agar von mehr als 0,3 % entsteht ein Zwitterprodukt, d.h. das Produkt ist ohne flüssige Phase aber mit einer zarten Kruste ausgestattet. Die flüssige Phase ist in diesem Falle leicht geliert.

Ein weiteres Mittel, das ähnlich gute Resultate erbringt, ist Maltitsirup.

Ohne den Zusatz eines kristallisationsverzögernden Mittels kommt es nicht nur zur Bildung grober Kristalle bzw. zur Vermusung, sondern auch zur unkontrollierten Abführung von Kristallisationswärme. Dadurch entstehen in der Kruste entweder Löcher oder Nasen.

Es scheint, daß Formpuder ein sehr guter Wärmeisolator ist, welcher die Wärmeenergie, die beim Kristallisieren entsteht, nicht schnell genug abführt. Bei ungenügender Wärmeabführung entstehen in der fertigen Kruste daher entweder Nasen oder Löcher. Auffällig an den nach innen gerichteten Nasen bzw. Löchern ist, daß sie immer im Zentrum des Puderkastens entstehen.

Durch den Einsatz eines Ventilators während der Reifezeit kann man erreichen, daß diese Erscheinungen verschwinden. Auf den Einsatz eines Ventilators kann jedoch bei Einsatz des erfindungsgemäßen Gemisches verzichtet werden. Hierbei ist jedoch entscheidend, daß bestimmte Mengenverhältnisse eingehalten werden. Denn bei mehr als 0,2 % Pektinpulver wird die flüssige Phase angeliert, so daß sie eine Konfitürekonsistenz hat. Ebenso ist es notwendig, das Verhältnis von Polyol zu Wasser einzuhalten. Aus diesem Grunde werden erfindungsgemäß vorzugsweise 42 bis 71 Gew.-% Polyol, 28 bis 48 Gew.-% Wasser oder Wasser-Alkohol-Gemisch, 10 - 1 Gew.-% Gelier- und Verdickungsmittel miteinander gemischt.

Die Erfindung wird anhand der folgenden Beispiele näher erläutert:

**Beispiel 1**

Herstellung alkoholischer Krustenware

Es wurde ein Gemisch hergestellt, welches aus 2100 g Xylit, 1050 g Wasser, 400 g 60 % Vol.-igem Alkohol, 60 g Gummi-Arabikum (sprühgetrocknet) und 6 g Pektin Pomosin 1000 S bestand.

Kristalliner Xylit wurde mit Gummi-Arabikum und Pektin trocken gemischt. Dies ist erforderlich, um eine Klumpenbildung zu vermeiden. Sowohl Gummi-Arabikum als auch Pektin neigen beim Einrühren in Wasser zur Klumpenbildung und lösen sich daher sehr schlecht.

Dieses Trockengemisch wurde in das Wasser eingerührt und die Lösung für die Herstellung alkoholischer Krustenware bei 114 °C gekocht. Hierbei ergab sich ein Trockensubstanzgehalt von 78 %. Nach dem Kochen wurde der Alkohol sofort ohne Verlust in die Xylitlösung untergerührt und unmittelbar in den Formpuder gegossen. Die Temperatur der Stärke lag bei 35 °C und die Restfeuchte der Stärke bei 5 bis 7 %. Durch die Zugabe des Alkohols wurde eine Löslichkeit des Xylits von etwa 58 % erreicht.

**Beispiel 2**

Herstellung saurer Krustenware

Für die Herstellung saurer Krustenware mit Xylit wurde ähnlich vorgegangen. Nur wurde hier der Kochgrad auf 109 °C eingestellt. Hierbei ergab sich ein Trockensubstanzgehalt von 68 %. Im Gegensatz zur Saccharosekruste, wo die Genußmittelsäure wegen der zu hohen Inversion erst bei 65 °C untergerührt werden darf, kann man Xylit bei Genußmittelsäure sofort untermischen, da hier eine Invertierung nicht eintritt. Durch die Säurezugabe fällt der Trockensubstanzgehalt nur geringfügig ab.

Die fertig gekochten Lösungen wurden in Formpuder gegossen. Die Temperatur des Formpuders lag ebenso wie bei der Herstellung der alkoholischen Krustenware bei 35 °C und die Restfeuchte der Stärke bei 5 bis 7 %.

Die Wendezeit lag in beiden Beispielen im Gegensatz zur Saccharose nicht bei 2 Std., sondern bei 6 Std.. Die Reifezeit der Xylitkruste, d.h. die Zeit bis zur vollständigen Krustenbildung bei etwa 24 Std..

Schematische Darstellung und Kennzahlen der nach den
Beispielen 1 und 2 hergestellten Krustenwaren

|                           |    | 2100 g<br>XYLIT<br>2 TEILE | : | 1050 g<br>WASSER<br>1 Teil |                           |
|---------------------------|----|----------------------------|---|----------------------------|---------------------------|
| SAURE KRUSTEN-<br>WARE    |    |                            |   |                            | ALKOHOLISCHE<br>KRUSTENWARE |
|                           | 1. | TROCKENGEMISCH<br>erstellen |   |                            |                           |
| 109 Grad C                | 2  | in Wasser aufkochen        |   |                            | 114 Grd C                 |
| 68 %                      |    | TS entsprechend<br>Kochgrad |   |                            | 78 %                      |
| 20 g Säure<br>1:1 gelöst  | 3. | mischen                    |   |                            | 400-450 g 60 Vol%<br>Alkohol |
| 3 g Frucht-<br>aroma      |    |                            |   |                            |                           |
| 67,5%                     | 4. | TS nach dem<br>Untermischen<br>ohne Abkühlen<br>der Gießmasse |   | | 71 % |
|                           | 5. | Gießen in Form-<br>Puder   |   |                            |                           |
| 35 Grad C                 |    | F.P.Temperatur             |   |                            | 35 Grad C                 |
| 5-7%                      |    | F.P.Restfeuchte            |   |                            | 5-7%                      |
| 5 Stunden                 |    | Wendezeit                  |   |                            | 6 Stunden                 |
| 24 Stunden                |    | Reifezeit                  |   |                            | 24 Stunden                |
| 62 %                      |    | TS nach dem<br>Reifen      |   |                            | 57.5%                     |

**Patentansprüche**

1. Zuckerfreie Krustenpraline, bestehend aus Polyolen, Wasser oder einem Wasser-Alkohol-Gemisch, Gelier- und kristallisationsverzögernden Verdickungsmitteln sowie Aromen und/oder Genußmittelsäuren, erhältlich durch Mischen von 42-71 Gew.% Polyol, 28-48 Gew.% Wasser oder Wasser-Alkohol-Gemisch, 10 - 1 Gew.% Gelier- und Verdickungsmitteln, anschließendes Kochen dieses Gemisches und Gießen in Formpuder.

2. Krustenpraline nach Anspruch 1,
dadurch gekennzeichnet, daß das Verhältnis Polyol zu Wasser 2:1 beträgt.

3. Krustenpraline nach einem der Ansprüche 1 oder 2,
dadurch gekennzeichnet, daß als Polyol Sorbit, Mannit, Xylit, Maltit, Lactit und/ oder Isomalt eingesetzt werden.

**4.** Krustenpraline nach einem der Ansprüche 1 - 3,
**dadurch gekennzeichnet,** daß daß 60 Vol.%-iger Alkohol eingesetzt wird.

**5.** Krustenpraline nach einem der Ansprüche 1 - 4,
**dadurch gekennzeichnet,** daß als Verdickungsmittel Gummi-Arabicum eingesetzt wird.

**6.** Krustenpraline nach einem der Ansprüche 1 - 5,
**dadurch gekennzeichnet,** daß als Verdickungsmittel Maltitsirup eingesetzt wird.

**7.** Krustenware nach einem der Ansprüche 1 - 6,
**dadurch gekennzeichnet,** daß als Verdickungsmittel Agar-Agar eingesetzt wird.

## Claims

**1.** A sugar-free crust chocolate, consisting of polyols, water or a water-alcohol mixture, thickening agents retarding gelatinization and crystallization as well as flavor substances and/or stimulant acids, obtainable by mixing 42 to 71 % by weight of polyol, 28 to 48 % by weight of water or water-alcohol mixture, 10 to 1 % by weight of gelatinizing and thickening agents, followed by boiling this mixture and casting it in molding powder.

**2.** The crust chocolate according to claim 1, characterized in that the ratio of polyol to water is 2:1.

**3.** The crust chocolate according to any one of claims 1 or 2, characterized in that the polyol used is sorbitol, mannitol, xylitol, maltitol, lactitol and/or isomalt.

**4.** The crust chocolate according to any one of claims 1 to 3, characterized in that an alcohol having a strength of 60 % by volume is used.

**5.** The crust chocolate according to any one of claims 1 to 4, characterized in that the thickening agent used is gum arabic.

**6.** The crust chocolate according to any one of claims 1 to 5, characterized in that the thickening agent used is maltitol syrup.

**7.** The crust article according to any one of claims 1 to 6, characterized in that the thickening agent used is agar agar.

## Revendications

**1.** Bonbon en croûte sans sucre composé de polyols, d'eau ou d'un mélange eau-alcool, d'agents gélifiants et d'agents épaississants retardateurs de cristallisation, ainsi que d'arômes et/ou d'acides de stimulants, qu'on peut obtenir en mélangeant 42 à 71 % en poids de polyol, 28 à 48 % en poids d'eau ou d'un mélange eau-alcool, 10 à 1 % en poids d'agents gélifiants et épaississants, en cuisant ensuite ce mélange et en le coulant dans une poudre de moulage.

**2.** Bonbon selon la revendication 1, caractérisé en ce que le rapport du polyol à l'eau est de 2:1.

**3.** Bonbon selon une des revendications 1 et 2, caractérisé en ce qu'on utilise comme polyol, de la sorbite, de la mannite, de la xylite, de la maltite, de la lactite et/ou de l'isomalt.

**4.** Bonbon selon une des revendications 1 à 3, caractérisé en ce qu'on utilise de l'alcool à 60 % en volume.

**5.** Bonbon selon une des revendications 1 à 4, caractérisé en ce qu'on utilise de la gomme arabique en tant qu'agent épaississant.

**6.** Bonbon selon une des revendications 1 à 5, caractérisé en ce qu'on utilise du sirop de maltite comme agent épaississant.

7. Bonbon en croûte selon une des revendications 1 à 6, caractérisé en ce qu'on utilise de l'agar-agar en tant qu'agent épaississant.